# EUROPÄISCHE PATENTSCHRIFT

(11) **EP 0 893 312 B1**
(45) Veröffentlichungstag und Bekanntmachung des Hinweises auf die Patenterteilung: **26.09.2001**
(21) Anmeldenummer: 98118638.0
(22) Anmeldetag: 28.02.1994
(51) Int. Cl.: B60R 21/30, B60R 21/20, B60R 21/28

(54) **Fahrerseitiges Gassack-Rückhaltesystem für Fahrzeuge**
Driver side air bag restraint system for vehicles
Sac gonflable de retenue côté conducteur pour véhicules

(30) Priorität: 12.03.1993 DE 43079695 F
(43) Veröffentlichungstag der Anmeldung: 27.01.1999
(62) Teilanmeldung aus: 94102975.3
(73) Patentinhaber: TRW Occupant Restraint Systems GmbH & Co. KG, 73551 Alfdorf (DE)
(72) Erfinder: Föhl, Artur, 73614 Schorndorf (DE)
(74) Vertreter: Degwert, Hartmut, Dipl.-Phys.

(56) Entgegenhaltungen:
- DE-A- 2 151 710
- US-A- 3 843 152

## Beschreibung

Die Erfindung betrifft ein fahrerseitiges Gassack-Rückhaltesystem für Fahrzeuge, mit einem außerhalb des Lenkrades angeordneten Druckgasspeicher zum Befüllen des an der Lenkradnabe angeordneten Gassacks und einer zwischen dem Druckgasspeicher und der Einströmöffnung des Gassacks angeordneten Gasführung. Die Erfindung betrifft ferner ein Lenkrad mit einem solchen Gassack-Rückhaltesystem.

Üblicherweise ist bei fahrerseitigen Gassack-Rückhaltesystemen ein pyrotechnischer Gasgenerator in die Lenkradnabe integriert. Der Gasgenerator wird durch einen elektrischen Impuls gezündet, den ein Verzögerungssensor abgibt.

Zur Einsparung des Raumbedarfs für die Unterbringung des Gasgenerators in der Lenkradnabe und zur Vermeidung von Drehkupplungen für die Zuführung des elektrischen Auslöseimpulses zu dem drehfest in die Lenkradnabe eingebauten Gasgenerator ist bereits in der DE 40 11 492 A1 vorgeschlagen worden, die Gasquelle außerhalb des Lenkrades anzuordnen. Die Gasquelle umfaßt mehrere Druckgasbehälter, die fest im Fahrzeug eingebaut sind. Von jedem Druckgasbehälter führt eine Leitung zu einer Drehkupplung, die aus einer ortsfesten Verteilerscheibe und einer mit dieser in Gleitkontakt stehenden, mit der Lenkradnabe drehbaren Verteilerscheibe gebildet ist. Ein solche Drehkupplung ist aufwendig in der Herstellung und beeinträchtigt durch den Reibungswiderstand zwischen den Verteilerscheiben die Leichtgängigkeit des Lenkrades.

Aus der US-A-3 843 152 sind ein fahrerseitiges Gassack-Rückhaltesystem und ein Lenkrad mit einem Gassack-Rückhaltesystem mit den Merkmalen des Oberbegriffs des Anspruchs 1 bzw. des Anspruchs 6 bekannt.

Durch die in den Patentansprüchen 1 und 6 angegebene Erfindung wird ein fahrerseitiges Gassack-Rückhaltesystem für Fahrzeuge bzw. ein Lenkrad mit einem Gassack-Rückhaltesystem geschaffen, bei dem die Gasführung zwischen der Lenkradnabe und der außerhalb des Lenkrades angeordneten Gasquelle frei von die Leichtgängigkeit des Lenkrades beeinträchtigenden Reibungseinflüssen ist und mit geringem Aufwand in Serie herstellbar ist. Die Erfindung sieht gemäß einem ersten Aspekt ein fahrerseitiges Gassack-Rückhaltesystem mit den Merkmalen des Anspruchs 1 und gemäß einem zweiten Aspekt ein Lenkrad mit den Merkmalen des Anspruchs 6 vor. Durch den Wegfall von miteinander in Berührung stehenden Drehkupplungsteilen wird die Leichtgängigkeit gegenüber einem Lenkrad ohne Gassack-Rückhaltesystem nicht verschlechtert. Der Dichtspalt wird lediglich durch die Formgebung und Anordnung bestimmter Bereiche an der Lenkradnabe und an der Lenksäule gebildet, wozu es nur eines geringen Aufwandes an Material und Konstruktion bedarf. Die Gasströmung kann von der Gasquelle bis hinein in den Gassack an einem auf dem Weg der Gasführung vorhandenen Dichtspalt nicht entweichen, sondern es kann an dem Dichtspalt sogar ein die Füllung des Gassacks unterstützender Strahlpumpen-Effekt auftreten, durch den Umgebungsluft in die Gasströmung eingesaugt wird. Weiterhin unterstützt der Dichtspalt beim Eintauchen des Fahrzeuginsassen in den aufgeblasenen Gassack in vorteilhafter Weise ein kontrolliertes Abströmen des Füllgases. Die bei herkömmlichen Konstruktionen erforderlichen Entlastungsöffnungen in der Wandung des Gassacks können zumindest teilweise entfallen. Dies ist auch insofern von Vorteil, als Verletzungen des Insassen durch etwaige aus dem Gassack austretende Partikel oder heiße Gase vermieden werden. Eine besonders raumsparende und leicht in ein Fahrzeug integrierbare Ausführungsform ist in Patentanspruch 2 angegeben.

Weitere Merkmale und Vorteile der Erfindung ergeben sich aus den Unteransprüchen sowie aus der Beschreibung und der beigefügten Zeichnung, auf die Bezug genommen wird. In der Zeichnung zeigen:
Fig. 1 eine schematische Seitenansicht eines fahrerseitigen Gassack-Rückhaltesystems vor seiner Aktivierung;
Fig. 2 das Gassack-Rückhaltesystem im aktivierten Zustand unmittelbar vor Beginn der Vorverlagerung des Fahrzeuginsassen;
Fig. 3 das Gassack-Rückhaltesystem im Moment des Eintauchens des Fahrzeuginsassen in den aufgeblasenen Gassack;
Fig. 4 eine Schnittansicht durch ein Lenkrad entlang Linie IV-IV in Fig. 5;
Fig. 5 eine Draufsicht auf ein Lenkrad bei abgenommenem Gassack;
Fig. 6 einen Schnitt entlang Linie VI-VI in Fig. 5;
Fig. 7 einen schematischen Längsschnitt zweier teleskopartig ineinander verschiebbarer Rohrabschnitte vor einer Verteilerkammer gemäß der Erfindung;
Fig. 8 einen diametralen Teilschnitt einer erfindungsgemäßen Ausführungsform eines Lenkrades, welches als vorgefertigtes Gassack-Rückhaltesystem zur Montage am Ende der Lenkwelle bereit ist;
Fig. 9 einen Teilschnitt einer erfindungsgemäßen Ausführungsform des Dichtspaltes zwischen Lenkradnabe und Verteilerkammer; und
Fig. 10 einen Teilschnitt einer beispielhaften Ausführungsform des Dichtspaltes zwischen Lenkradnabe und Verteilerkammer.

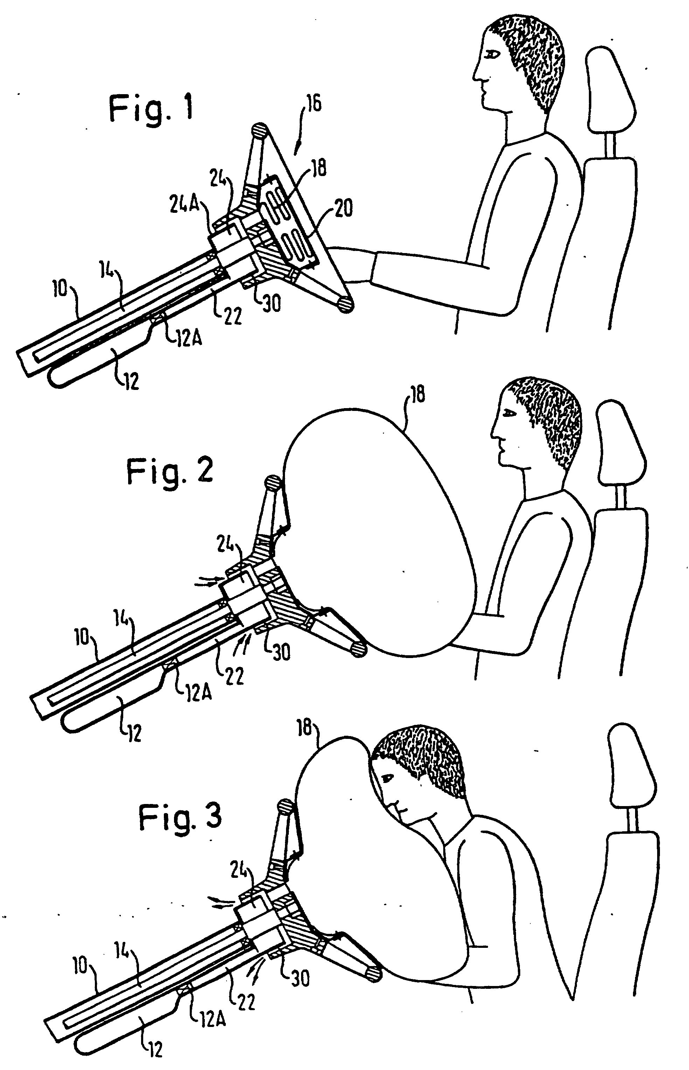

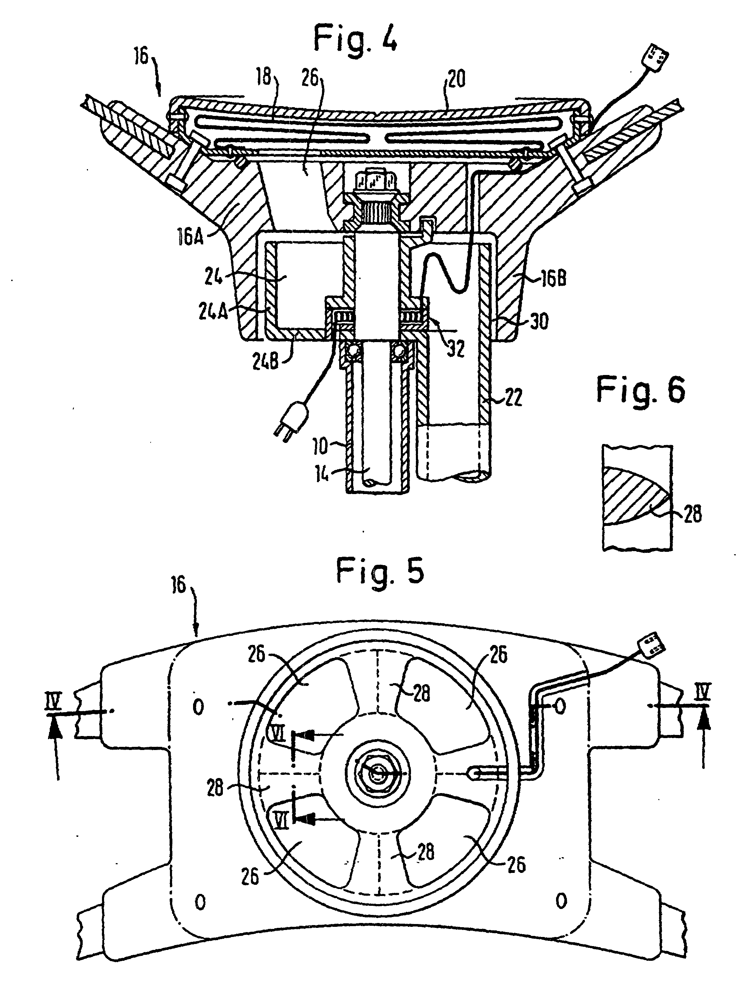

An der Lenksäule 10 eines Fahrzeugs ist ein gestreckter Druckgasbehälter 12 von allgemein zylindrischer Form außenseitig und parallel zur Achse der Lenksäule angeordnet. Die von der rohrförmigen Lenksäule 10 umgebene Lenkwelle 14 trägt an ihrem dem Fahrer zugewandten Ende ein Lenkrad 16, dessen Nabe einen zentralen Durchgang für das mit Gewinde versehene Ende der Lenkwelle 14 aufweist und mittels einer Schraubmutter daran festgelegt ist (Fig. 4). Ein im Ruhezustand (Fig. 1) gefalteter Gassack 18 ist an der Nabe des Lenkrades 16 angeordnet und wird von einer aufreißbaren Abdeckung 20 auf der dem Fahrer zugewandten Seite abgedeckt. Zwischen dem Druckgasbehälter 12 und dem Innenraum des Gassacks 18 besteht eine Gasführung, die weiter unten näher beschrieben wird.

Der Druckgasbehälter 12 ist mit einem Verschluß 12A versehen, der zur Aktivierung des Rückhaltesystems beispielsweise mittels einer kleinen pyrotechnischen Ladung zerstört werden kann.

Bei aktiviertem Rückhaltesystem (Fig. 2) sind die in dem Druckgasbehälter 12 unter einem hohen Druck von beispielsweise 200 bar gespeicherten Gase in den Gassack 18 eingeströmt, der nun aufgeblasen ist. Anschließend tritt die Vorverlagerung des Fahrzeuginsassen ein, dessen Kopf und Oberkörper schließlich in den aufgeblasenen Gassack 18 eintauchen (Fig. 3).

An den Druckgasbehälter 12 ist eine Rohrleitung 22 angeschlossen, die sich parallel zur Lenksäule 10 entlang deren Mantelfläche erstreckt und in eine ringförmige, die Lenkwelle 14 umgebende Verteilerkammer 24 einmündet. Diese Verteilerkammer 24 wird von einer allgemein topfförmigen Wandung begrenzt, deren Umfangsteil 24A zylindrisch und deren Boden 24B eben ist; diese topfförmigen Wandung ist einteilig mit der Rohrleitung 22 verbunden und zur Seite des Lenkrades hin offen.

Die Nabe 16A des Lenkrades 16 weist gegenüber der Verteilerkammer 24 vier auf einem Kreis angeordnete Durchtrittsöffnungen 26 auf. Die Durchtrittsöffnungen 26 sind durch speichenartig angeordnete Stege 28 abgegrenzt, deren Querschnitt ein stromlinienförmiges Profil aufweist, wie in Fig. 6 gezeigt. Die Seitenflächen der Stege 28 konvergieren jeweils in Richtung zu der Verteilerkammer 24 und bilden eine gemeinsame Kante An die Lenkradnabe 16A ist eine den Umfangsteil 24A der Verteilerkammer 24 umgebende Schürze 16B angeformt. Zwischen der zylindrischen Innenfläche der Schürze 16B und der Außenfläche des Umfangsteils 24A ist ein ringförmiger Dichtspalt 30 gebildet. Die axiale Länge des Dichtspaltes 30 entspricht ungefähr der Höhe der Verteilerkämmer 24. Wie aus Fig. 4 ersichtlich ist, liegen die Öffnungen 26 der Lenkradnabe 16A unmittelbar der offenen Seite der Verteilerkammer 24 gegenüber. Ferner liegen die Öffnungen 26 unmittelbar der Einblasöffnung des gefalteten Gassacks 18 gegenüber.

Wie aus Fig. 4 ferner ersichtlich ist, läßt sich im Inneren der Verteilerkammer 24 ohne Schwierigkeiten eine elektrische Drehkupplung 32 für den Betätigungskontakt des Signalhorns unterbringen. Diese Drehkupplung 32 besteht aus einer spiralförmigen "Uhrwerkfeder" in einem am Boden 24B befestigten zylindrischen Gehäuse und einem an die Lenkradnabe 16A drehfest angekoppelten, die Lenkwelle 14 hülsenförmig umgebenden Führungsteil, aus dem ein Anschluß der Drehkupplung herausgeführt ist.

Bei Aktivierung des Rückhaltesystems gelangen die aus dem Druckgasbehälter 12 ausströmenden Gase über die Rohrleitung 22 in die Verteilerkammer 24, treten durch die Öffnungen 26 und gelangen in den Innenraum des Gassacks 18, der sich nun ausdehnt und die Abdeckung 20 aufbricht. Durch den ringförmigen Dichtspalt 30 kann die Gasströmung nicht entweichen; vielmehr wird sogar aufgrund des durch die Gasströmung verursachten Strahlpumpen-Effektes Umgebungsluft durch den Dichtspalt 30 in die Gasströmung eingesaugt, wie in Fig. 2 durch Pfeile angedeutet ist. Bei dem weiteren Ablauf des Fahrzeugaufpralls taucht der Fahrzeuginsasse mit Kopf und Oberkörper in den aufgeblasenen Gassack 18 ein, wie in Fig. 3 gezeigt. Es tritt nun eine Umkehrung. der Strömungsrichtung ein, da der Gasvorrat aus dem Druckgasbehälter 12 erschöpft ist und im Inneren des aufgeblasenen Gassacks 18 ein Überdruck herrscht, der durch das Eindringen des Fahrzeuginsassen noch vergrößert wird. Der Dichtspalt 30 wirkt nun als gedrosselte Entlastungsöffnung, die ein kontrolliertes Ausströmen der Gase aus dem Gassack 18 ermöglicht. Durch geeignete Dimensionierung des Dichtspalts 30 kann die Ausströmrate in einem weiten Bereich eingestellt werden. Entlastungsöffnungen in der Wandung des Gassacks 18 können teilweise oder auch ganz entfallen. Es kann somit verhindert werden, daß der Fahrzeuginsasse durch etwa in den austretenden Gasen mitgeführte Partikel verletzt wird oder, mit heißen Gasen in Berührung kommt.

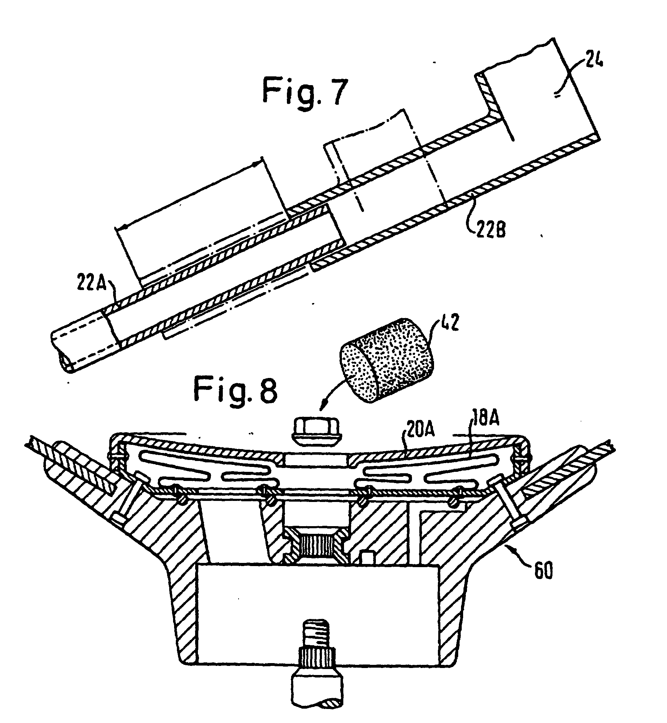

Fig. 7 zeigt eine erfindungsgemäße Ausführungsform der Rohrleitung zwischen der Verteilerkammer 24 und der (nicht gezeigten) Gasquelle für ein in der Tiefe verstellbares Lenkrad. Die Rohrleitung besteht aus zwei teleskopartig ineinander verschiebbaren Rohrabschnitten 22A und 22B. Durch diese Ausgestaltung wird die Länge des Dichtspaltes bei einer Verstellung des Lenkrades nicht verändert. Falls das Lenkrad auch in der Höhe verstellbar sein soll, ist gemäß einer Weiterbildung dieser Ausführungsform vorgesehen, den Abschnitt 22A der Rohrleitung wenigstens teilweise flexibel auszubilden.

In Fig. 8 ist eine fertig mit gefaltetem Gassack 18A und mit einer Abdeckung 20A bestückte Lenkrad-Baugruppe 60 gezeigt, die zur Montage am Ende einer Lenkwelle bereit ist. Abweichend von der bisher beschriebenen Ausführungsform ist der Gassack 18A schlauchringförmig ausgebildet, so daß er im gefalteten Zustand einen zentralen Freiraum für das Aufsetzen der Schraubmutter auf das Ende der Lenkwelle beläßt. Die Abdeckung 20A ist mit einer entsprechenden Ausnehmung versehen, in die nach der Montage der Lenkrad-Baugruppe ein Stopfen 42 eingesetzt werden kann.

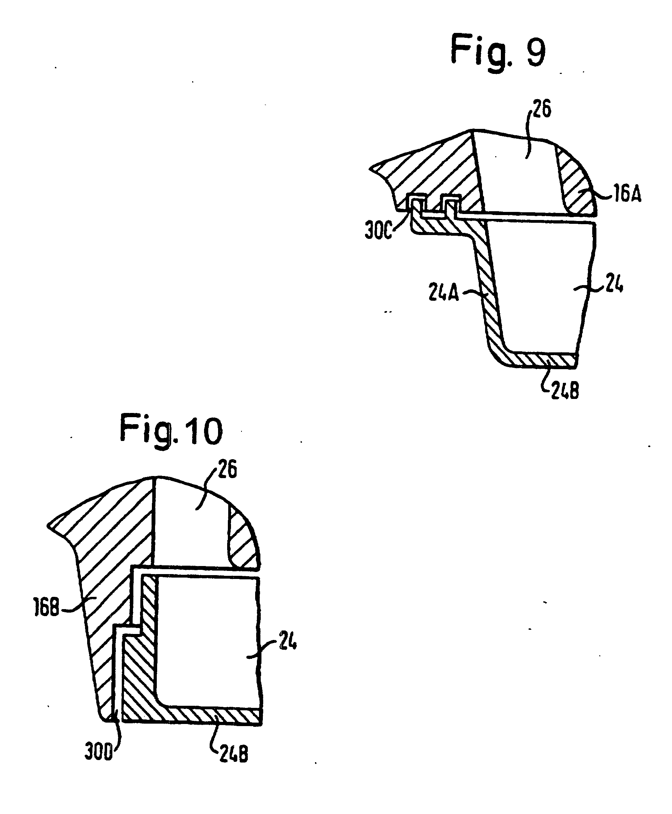

Die Figur 9 zeigt eine erfindungsgemäße Ausführungsform des Dichtspaltes. Der Dichtspalt 30B erstreckt sich radial bezüglich der Achse der Lenkwelle zwischen zwei ebenen Spaltbegrenzungsflächen auf den einander zugewandten Seiten der Lenkradnabe und der die Verteilerkammer 24 umschließenden Wandung, der Dichtspalt 30C ist labyrinthartig ausgebildet.

Bei der beispielhaften Ausführungsform nach Fig. 10 ist der Dichtspalt 30D abweichend von der Ausführung nach Fig. 4 stufenförmig ausgebildet, wodurch die Länge des Dichtspaltes vergrößert und der Strömungswiderstand erhöht wird.

## Patentansprüche

1. Fahrerseitiges Gassack-Rückhaltesystem für Fahrzeuge, mit einem außerhalb des Lenkrades (16) angeordneten Druckgasspeicher (12) zum Befüllen des an der Lenkradnabe (16A) angeordneten Gassacks (18) und einer zwischen dem Druckgasspeicher (12) und der Einströmöffnung des Gassacks (18) angeordneten Gasführung, bei dem die Gasführung an ihrem Übergang zu dem Lenkrad (16) durch einen ringförmigen Dichtspalt (30) zwischen einer an der Lenkradnabe (16A) gebildeten ersten Spaltbegrenzungsfläche und einer gegenüberliegenden zweiten Spaltbegrenzungsfläche an einer bezüglich des Fahrzeugaufbaus feststehenden Wandung (24A) der Gasführung ohne Berührung zwischen diesen Spaltbegrenzungsflächen abgedichtet ist, der Dichtspalt (30) durch seine Dimensionierung und Anordnung relativ zur Strömungsrichtung der Gase das Einsaugen von Außenluft durch den Dichtspalt (30) unter der Wirkung der Gasströmung im Inneren der Gasführung aufgrund des Strahlpumpen-Effektes ermöglicht und die Gasführung eine die Lenkwelle (14) ringförmig umgebende, topfförmige Verteilerkammer (24) aufweist, an der die zweite Spaltbegrenzungsfläche gebildet ist, **dadurch gekennzeichnet, daß** der Dichtspalt (30C) eine Labyrinth-Dichtung bildet und die Rohrleitung aus teleskopartig ineinander verschiebbaren Abschnitten (22A, 22B) zusammengesetzt ist.

2. Gassack-Rückhaltesystem nach Anspruch 1, **dadurch gekennzeichnet, daß** der Druckgasspeicher (12) einen allgemein zylinderförmig gestreckten Druckbehälter aufweist, der parallel zur Lenksäule (10) angeordnet und durch eine parallel zur Lenksäule (10) und außerhalb von dieser angeordnete Rohrleitung (22) mit dem Innenraum der Verteilerkammer (24) verbunden ist.

3. Gassack-Rückhaltesystem nach Anspruch 1 oder 2, **dadurch gekennzeichnet, daß** der Dichtspalt (30) zwischen dem zylindrischen Umfangsteil (24A) der die Verteilerkammer (24) begrenzenden Wandung und der Innenseite einer die Verteilerkammer (24) umgebenden, an die Lenkradnabe (16A) angeformten Schürze (16B) gebildet ist.

4. Gassack-Rückhaltesystem nach einem der vorherstehenden Ansprüche, **dadurch gekennzeichnet, daß** mehrere Gasdurchtrittsöffnungen (26) in der Nabe (16A) des Lenkrades zwischen speichenförmig angeordneten Stegen (28) ausgebildet sind, die jeweils zur Verteilerkammer (24) hin konvergierende Seitenflächen aufweisen.

5. Lenkrad für ein Gassack-Rückhaltesystem mit einem außerhalb des Lenkrades (16) angeordneten Druckgasspeicher (12) zum Befüllen des an der Lenkradnabe (16A) angeordneten Gassacks (18) und einer zwischen dem Druckgasspeicher (12) und der Einströmöffnung des Gassacks (18) angeordneten Gasführung, bei dem die Gasführung an ihrem Übergang zu dem Lenkrad (16) durch einen ringförmigen Dichtspalt (30) zwischen einer an der Lenkradnabe (16A) gebildeten ersten Spaltbegrenzungsfläche und einer gegenüberliegenden zweiten Spaltbegrenzungsfläche an einer bezüglich des Fahrzeugaufbaus feststehenden Wandung (24A) der Gasführung ohne Berührung zwischen diesen Spaltbegrenzungsflächen abgedichtet ist, der Dichtspalt (30) durch seine Dimensionierung und Anordnung relativ zur Strömungsrichtung der Gase das Einsaugen von Außenluft durch den Dichtspalt (30) unter der Wirkung der Gasströmung im Inneren der Gasführung aufgrund des Strahlpumpen-Effektes ermöglicht und die Gasführung eine die Lenkwelle (14) ringförmig umgebende Verteilerkammer (24) aufweist, an der die zweite Spaltbegrenzungsfläche gebildet ist, **dadurch gekennzeichnet, daß** der Dichtspalt (30C) eine Labyrinth-Dichtung bildet und daß das Lenkrad mit dem schlauchringförmig ausgebildeten, zusammengefalteten und mit einer Abdeckung (20A) versehenen Gassack (18A) eine vormontierte Baugruppe (60) bildet.

## Claims

1. A driver side gas bag restraint system for vehicles, comprising a compressed gas source (12) arranged outside the steering wheel (16) for filling the gas bag (18) arranged on the steering wheel hub (16A), and a gas guiding means arranged between the compressed gas source (12) and the inflow opening of the gas bag (18), in which the gas guiding means at its transition to the steering wheel (16) is sealed by an annular sealing gap (30) between a first gap limiting surface formed on the steering wheel hub (16A) and an opposing second gap limiting surface on a wall (24A) of the guiding means stationary with respect to the vehicle structure, without any contact between these gap limiting surfaces, the sealing gap (30) is dimensioned and arranged relative to the flow direction of the gases such that it makes possible the intake of atmospheric air through the sealing gap (30) under the action of the gas flow in the interior of the gas guiding means due to the jet pump effect, and the gas guiding means comprises a cup-shaped distribution chamber (24) which annularly surrounds the steering column (14) and on which the second gap limiting surface is formed, **characterized in that** the sealing gap (30C) forms a labyrinth seal and the conduit is composed of sections (22A, 22B) which can be shifted into one another in the nature of a telescope.

2. The gas bag restraint system according to claim 1, **characterized in that** the compressed gas source (12) comprises a generally cylindrically shaped, elongated pressure container which is arranged parallel to the steering column (10) and is connected with the interior of the distribution chamber (24) by means of a conduit (22), the latter being arranged parallel to the steering column (10) and outside of it.

3. The gas bag restraint system according to claim 1 or 2, **characterized in that** the sealing gap (30) is formed between the cylindrical peripheral part (24A) of the wall limiting the distribution chamber (24) and the inner side of a skirt (16B) surrounding the distribution chamber (24) and formed on the steering wheel hub (16A).

4. The gas bag restraint system according to any of the preceding claims, **characterized in that** a plurality of gas passage openings (26) is formed in the hub (16A) of the steering wheel between webs (28) which are arranged in the manner of spokes, the openings each having side faces converging towards the distribution chamber (24).

5. A steering wheel for a gas bag restraint system, comprising a compressed gas source (12) arranged outside the steering wheel (16) for filling the gas bag (18) arranged on the steering wheel hub (16A), and a gas guiding means arranged between the compressed gas source (12) and the inflow opening of the gas bag (18), in which the gas guiding means at its transition to the steering wheel (16) is sealed by an annular sealing gap (30) between a first gap limiting surface formed on the steering wheel hub (16A) and an opposing second gap limiting surface on a wall (24A) of the gas guiding means stationary with respect to the vehicle structure, without any contact between these gap limiting surfaces, the sealing gap (30) is dimensioned and arranged relative to the flow direction of the gases such that it makes possible the intake of atmospheric air through the sealing gap (30) under the action of the gas flow in the interior of the gas guiding means due to the jet pump effect, and the gas guiding means comprises a cup-shaped distribution chamber (24) which annularly surrounds the steering column (14) and on which the second gap limiting surface is formed, **characterized in that** the sealing gap (30C) forms a labyrinth seal and in that the steering wheel together with the folded gas bag (18A), which is formed as an annular tube and is provided with a cover (20A), constitutes a preassembled unit (60).

## Revendications

1. Système de retenue par coussin à gaz côté conducteur pour véhicules, comportant un réservoir de gaz comprimé (12) agencé en dehors du volant (16) pour remplir le coussin à gaz (18) agencé sur le moyeu (16a) du volant et un moyen de guidage du gaz agencé entre le réservoir de gaz comprimé (12) et l'orifice d'admission du coussin à gaz (18), dans lequel le moyen de guidage du gaz est étanché à sa transition vers le volant (16) par une fente d'étanchéité (30) annulaire entre une première surface de limitation de fente formée sur le moyeu (16A) du volant et une deuxième surface de limitation de fente opposée, sur une paroi (24A) du moyen de guidage du gaz, fixe par rapport à la structure du véhicule, sans contact entre ces surfaces de limitation de fente, la fente d'étanchéité (30) permettant, en raison de ses dimensions et de son agencement par rapport à la direction d'écoulement des gaz, l'aspiration de l'air extérieur à travers la fente d'étanchéité (30) sous l'effet de l'écoulement de gaz à l'intérieur du moyen de guidage du gaz, dû à l'effet de pompe à jet, et le moyen de guidage du gaz présentant une chambre de distribution (24) en forme de pot entourant à la manière d'un anneau l'arbre de direction (14) et sur laquelle est formée la deuxième surface de limitation de fente, **caractérisé en ce que** la fente d'étanchéité (30C) forme une garniture en labyrinthe et en ce que la conduite tubulaire est composée de tronçons (22A, 22B) enfichables l'un dans l'autre à la manière d'un télescope.

2. Système de retenue par coussin à gaz selon la revendication 1, **caractérisé en ce que** le réservoir de gaz comprimé (12) présente un réservoir de pression allongé de forme en général cylindrique, qui est agencé parallèlement à la colonne de direction (10) et qui est relié à l'intérieur de la chambre de distribution (24) par une conduite tubulaire (22) agencée parallèlement à la colonne de direction (10) et en dehors de celle-ci.

3. Système de retenue par coussin à gaz selon la revendication 1 ou 2, **caractérisé en ce que** la fente d'étanchéité (30) est formée entre la partie périphérique cylindrique (25A) de la paroi délimitant la chambre de distribution (24) et la face intérieure d'une jupe (16B) entourant la chambre de distribution (24) et formée sur le moyeu (16A) du volant.

4. Système de retenue par coussin à gaz selon l'une quelconque des revendications précédentes, **caractérisé en ce que** plusieurs ouvertures de passage de gaz (26) sont réalisées dans le moyeu (16A) du volant entre des âmes (28) agencées en forme de rayons, lesdites ouvertures présentant chacune des surfaces latérales convergeant vers la chambre de distribution (24).

5. Volant pour un système de retenue par coussin à gaz, comportant un réservoir de gaz comprimé (12), agencé en dehors du volant (16), pour remplir le coussin à gaz (18) agencé sur le moyeu (16A) du volant, et un moyen de guidage du gaz agencé entre le réservoir de gaz (12) et l'orifice d'écoulement du coussin à gaz (18), dans lequel le moyen de guidage du gaz est étanché à sa transition vers le volant (16) par une fente d'étanchéité (30) annulaire entre une première surface de limitation de fente formée sur le moyeu (16A) du volant et une deuxième surface de limitation de fente opposée, sur une paroi (24A) du moyen de guidage du gaz, fixe par rapport à la structure (carrosserie) du véhicule, sans contact entre ces surfaces de limitation de fente, la fente d'étanchéité (30) permettant, en raison de ses dimensions et de son agencement par rapport à la direction d'écoulement des gaz, l'aspiration de l'air extérieur à travers la fente d'étanchéité (30) sous l'effet de l'écoulement de gaz à l'intérieur du moyen de guidage du gaz, dû à l'effet de pompe à jet, et le moyen de guidage du gaz présentant une chambre de distribution (24) entourant à la manière d'un anneau l'arbre de direction (14) et sur laquelle est formée la deuxième surface de limitation de fente, **caractérisé en ce que** la fente d'étanchéité (30C) forme une garniture en labyrinthe et en ce que le volant forme un ensemble (60) préassemblé avec le coussin à gaz (18A), réalisé en forme de tuyau, plié et pourvu d'un couvercle (20A).
